# EUROPEAN PATENT SPECIFICATION

(11) **EP 3 842 181 B1**
(45) Date of publication and mention of the grant of the patent: **17.08.2022**
(21) Application number: 20213712.1
(22) Date of filing: 14.12.2020
(51) Int. Cl.: B23Q 35/10, B27C 5/00

(54) **COPYING UNIT FOR ADJUSTING THE FINISHING OF WOODEN PANELS SURFACES AND THE LIKE**
KOPIEREINHEIT ZUM FEINJUSTIEREN FÜR DIE BEARBEITUNG VON HOLZPANELOBERFLÄCHEN ODER DERGLEICHEN
UNITÉ DE COPIE POUR RÉGLER LA FINITION DES SURFACES DE PANNEAUX EN BOIS ET SIMILAIRES

(30) Priority: 24.12.2019 IT 201900025531
(43) Date of publication of application: 30.06.2021
(73) Proprietor: SCM Group S.p.A., 47921 Rimini (RN) (IT)
(72) Inventor: CONCONI, Roberto, 47921 RIMINI (IT)
(74) Representative: Tiburzi, Andrea

(56) References cited:
- DE-A1-102017 110 451

## Description

The present invention relates to a copying unit for adjusting the finishing of wooden panels surfaces and the like.

### Field of the invention

More in detail, the invention relates to a copying unit of the aforesaid type, designed and manufactured in particular to allow a finishing or rounding of the edges of the panels, but which can be used for any application in which it is necessary to work surfaces and edges of wooden panels.

In the following, the description will be directed to the machining of the edges of wooden panels , but it is clear that the same should not be considered limited to this specific use.

### Prior art

Prior art which discloses the preamble of claim 1 can be found in DE102017110451A.

As is known, currently wooden panels intended for various applications are often made, for example, with two panels between which chipboard is pressed. Therefore, these panels are generally edge banded by means of a tape, typically made of plastic, applied by glue, which is subsequently finished by means of suitable tools to round the edges.

Special cutters are used for such rounding of the edges.

It is essential, however, that the cutters do not damage the upper and lower surface of the panel and then the so-called noble part of the same. Therefore, it is necessary to correctly position the cutters with respect to the edge to be rounded. As is known, however, the panels hardly have an exactly flat surface and inevitably have surface inaccuracies.

In light of the above, to allow correct positioning of a cutter on the edge of the panel, so-called "copying" devices are provided, each one of which includes a disk concentric to the rotation axis of the cutter, which is made to roll or crawl on the panel surface, so that the cutter follows any surface imperfections of the panel.

In general, the rounding devices including cutter and copying device are applied to the sides of a sliding surface, on which the panels to be worked, previously edged by an edging system, slide.

In fact, after having applied a suitable edge banding tape on the lateral surfaces of the panels, the latter are moved, through the sliding plane, towards said rounding devices for subsequent finishing.

In general, the rounding of the edges of the sides of the panels provides for a rounding of the horizontal edges, of the vertical edges, and of the vertices or cusps of the same.

More specifically, each copier, by means of the cutter connected to the respective roller, is suitably moved with respect to the lateral surface of the panel, in such a way as to finish the horizontal, the vertical edge, and the vertex of this lateral surface.

Generally, since the horizontal edge has a much larger dimension than the vertical edge, and, considering the fact that in the rounding of the upper longitudinal edge the cutter is located near the noble part of the panel, which does not happen when rounding the vertical edge, to avoid any risk of damaging the surface of the panel, it is preferable to leave a minimum portion of the tape, so as to avoid any risk.

Subsequently, therefore, the panel is further finished by means of a further machine tool, called in jargon "edge scraper", and arranged downstream of the rounder, which allows removing any residuals of the tape from the longitudinal edge of the panel, after the rounding step.

In order to obtain a different arrangement of the cutter in the rounding step of the vertical edge with respect to the horizontal one, there are systems with copying devices having a substantially oval shape that are made to slide on the surface near the edges to be rounded.

In this way, when the copier moves on the surface near the lower corner, it will tend to keep the rounding cutter closer to the edge, while when the copier moves along a surface near the longitudinal edge, it will tend to keep a cutter slightly more distant from the edge to be rounded, so as to limit any risk of damaging the upper or lower noble part of the panel.

However, one of the main drawbacks of these known solutions is that they do not allow the dimensions of these copiers to be varied during the panel edge rounding operations.

A further drawback of these known solutions is given by the fact that they do not allow the copier itself to roll along the side surface of the panel. In fact, the rollers of these copiers do not roll but only crawl along the edge of the panel.

Therefore, in this way, the lateral surface of the panel could not be rounded correctly or it could be rounded only partially, making further interventions necessary, and therefore slowing down machining times.

### Scope of the invention

In the light of the above, it is, therefore, an object of the present invention to overcome the limitations of the prior art set out above by providing a copying unit for adjusting the finishing of surfaces of wooden panels and the like, which allows copier rolling along the side surface of the panel.

Another object of the invention is to provide a copying unit, which allows, in use, to vary the dimensions of the copier.

Another object of the invention is to provide a copying unit that is highly reliable, relatively simple to manufacture, and at competitive costs if compared to the prior art.

### Object of the invention

It is therefore specific object of the invention a copying unit for adjusting the machining of at least one surface and or one edge of a panel made of wood and the like for a woodworking machine, provided with a frame, comprising a support, which can be fixed to the frame of said woodworking machine, and a copier installed on said support, wherein said copier comprises an annular roller made of a partially deformable material, intended to contact said at least one surface of said panel, and a supporting group, arranged within said annular roller, having a circular shape defined by external surface, and wherein said supporting group is capable of modifying the shape of said annular roller so as to ovalize the shape of said copier, moving said axis of symmetry away from the surface of said panel to be machined, when said copier is in contact with the portion of said annular roller arranged opposite said support.

Advantageously according to the invention, said annular roller may have a rolling surface and an internal surface, wherein said rolling surface contacts, in use, the surface of the panel to be machined, wherein said surface inner, faced to said the external surface of said supporting group, contacts each roller of said plurality of rollers, and wherein each or said rollers is capable of rolling on said external surface of said supporting group and on said internal surface.

Still according to the invention, said supporting group may comprise one or more movable portions, and one or more fixed portions opposite said at least two movable portions, wherein each of said one or more movable portions and each of said one or more fixed portions is inserted inside of said external surface, and wherein each movable portion is capable of passing from a rest position, wherein it is at a first distance from said inner surface of said annular roller, to an operative position, wherein it is at a second distance from said internal surface of said annular roller, wherein said second distance is smaller than said first distance.

Always according to the invention, said supporting group may comprise at least two adjustment elements, wherein each adjusting element is arranged between said one or more mobile portions and said one or more fixed portions, and is capable of rotating around said axis of symmetry and to contact, in use, said respective one or more mobile portions.

Further according to the invention, each adjustment element may have a lobe capable of contacting, in use, said respective mobile portion, and a base pivoted on a pin.

Still according to the invention, each adjusting element may be capable of passing from a rest position, wherein it is arranged along the direction of an axis perpendicular to said axis of symmetry, and wherein both said adjustment elements are superimposed, to an operating position, wherein each adjustment element is rotated with respect to said pin, on which the base is pivoted, so that said respective lobe comes into contact with said respective mobile portion.

Always according to the invention, said supporting group may comprise an actuating device connected to each of said at least two adjustment elements, wherein said actuating device comprises a transmitting member, longitudinal and arranged in correspondence with said at least two adjustment elements, and an actuating member connected to said transmitting member.

Further according to the invention, said actuating device may be capable of passing from a first operating position, wherein said transmitting member and said actuating member are in a first position, at a second operating position, wherein said transmitting member and said actuating member are in a second position different from said first position, so that, when said actuating device is in said first operating position, each adjustment element is in said rest position, and that, when said actuating device is in said second operating position, each adjustment element is in said operating position.

Conveniently according to the invention, said one or more movable portions may be symmetrical and arranged at a distance from said support, and said one or more fixed portions may be symmetrical, facing said respective one or more mobile portions, and arranged at a further distance from said support, wherein said further distance is less than said distance.

Further according to the invention, said one or more movable portions may be two movable portions and that said one or more fixed portions may be two fixed portions, wherein said two movable portions and said two fixed portions each occupy a quarter of a circumference defined by said external surface.

### Brief description of the figures

The present invention will be now described, for illustrative but not limitative purposes, according to its preferred embodiments, with particular reference to the figures of the enclosed drawings, wherein:
figure 1 illustrates, in a perspective view, an embodiment of a copying unit, according to the present invention; and
figure 2 illustrates, in a front view, a detail of the copying unit of figure 1.

In the various figures, similar parts will be indicated by the same reference numbers.

### Detailed description

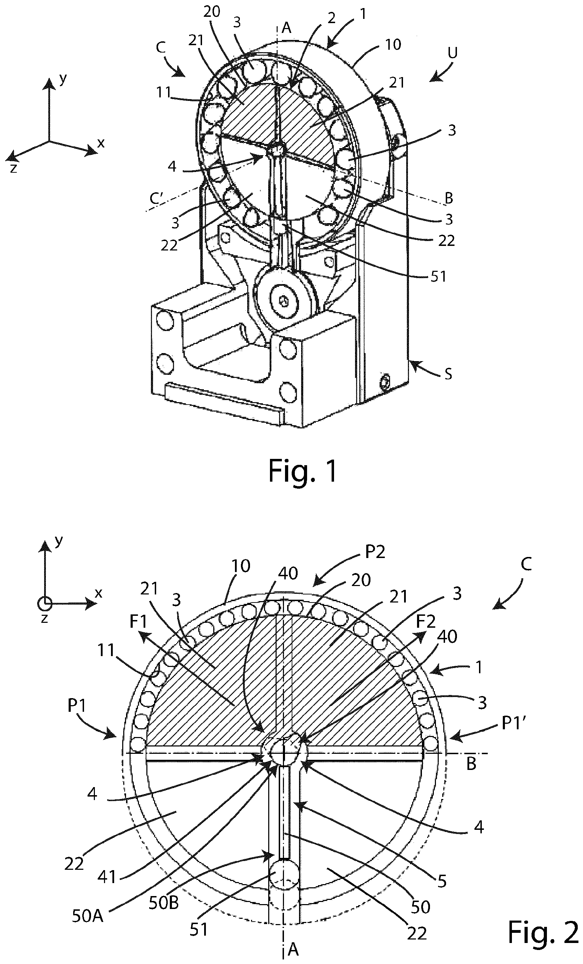

With reference to figures 1 and 2, a copying unit according to the present invention is shown, indicated as a whole with the reference letter U, which substantially comprises a copier C, and a support or frame S, on which said copier C is installed.

Said copier C, in its turn, comprises an annular roller 1, which is deformable and capable of rotating around an axis C', a supporting group 2, arranged inside said annular roller 1 and capable of adjusting and modifying the shape of said annular roller 1, and a plurality of rollers 3, interposed between said supporting group 2 and said annular roller 1.

The annular roller 1, as said, is able to rotate around the axis C', and, as better described below, when in use, it rolls along a surface, in particular a lateral surface, of a panel (not shown in the figures).

Said annular roller 1 has a substantially cylindrical section and has a first outer surface or rolling surface 10, and a second surface or inner surface 11, facing the supporting group 2.

In particular, said rolling surface 10 contacts, in use, the side surface or the edge of the panel, while said inner surface 11 is in contact with each roller 3 of said plurality of rollers 3.

Furthermore, in the embodiment described, said annular roller 1 is made of a partially deformable material, such as steel and the like. In this way, in fact, it is capable of deforming, if subjected to the action of stress.

In the embodiment described, said supporting group 2 has an external sliding surface 20, two movable or adjustment portions 21, two fixed portions 22, opposite to said movable portions 21, all inserted within said external surface 20, two adjustment elements or cams 4, capable of contacting, in use, said respective movable portions 21, and an actuating device 5, connected to said two adjustment elements 4.

Furthermore, said copier C also comprises a plurality of rollers 3, interposed between said external surface 20 and said internal surface 11 of said annular roller 1, arranged to allow relative rotation of said annular roller 1 with respect to said supporting group 2.

In another embodiment of the present invention, said copier C is devoid of said rollers 3, and the annular roller 1 is coupled to said supporting group 2 and contacts, in use, the surface of the panel to be machined.

More in detail, said first surface 10 of said annular roller 1 in use slides on the surface of the panel, while said internal surface 11 is in contact with said supporting group 2.

In other words, in this case, said annular roller 1 does not roll but crawls on the panel.

With particular reference to figure 2, the movable portions 21 are symmetrical with respect to an axis A, perpendicular to the axis C'.

In the present embodiment, said movable portions 21 are two and each one occupies a quarter of the circumference identified by the external surface 20. However, in further embodiments the number of said movable portions 21 can be different from two.

Each movable portion 21 is able to pass from a rest position, in which it is at a first distance from said inner surface 11 of said annular roller 1, to an operative position, in which it is at a second distance from said inner surface 11 of said annular roller 1, where said second distance is smaller than said first distance.

More in detail, each movable portion 21 is able to move along a respective radial direction (in the direction indicated by the arrows F1 and F2 in figure 2), thus distancing itself from each other, decreasing the distance between said external surface 20 and said internal surface 11 of said annular roller 1.

By way of example, the decrease in said distance is in the order of a few millimeters or tens of millimeters.

Similar to what has been said above, as can be seen from figure 2, the fixed portions 22 are symmetrical with respect to said axis A, and face said respective two movable portions 21 with respect to an axis B, perpendicular to said axis A.

In other words, in the embodiment described, each of said movable portions 21 and each of said fixed portions 22 is arranged in a respective portion delimited by said axis A, said axis B, and said external surface 20.

Each adjustment element 4, arranged between said movable portions 21 and said fixed portions 22, is able to rotate around the axis C'.

In particular, each regulating element 4 has a lobe 40 capable of contacting, in use, said respective mobile portion 21, and a base 41 pivoted on a pin (not shown in the figures).

More in detail, in the embodiment that is described, each adjustment element 4 is capable of passing from a rest position, in which it is arranged along the direction of axis A and in which both the adjustment elements 4 are overlapped, with said lobe 40 arranged towards the positive Y direction (with respect to a reference system XYZ shown in figures 1 and 2), to an operating position, in which each adjustment element 4 is rotated with respect to the pin, on which the base 41 is pivoted about, so that the respective lobe 40 comes into contact with said respective mobile portion 21.

The passage of each adjustment element 4 from said rest position to said operative position occurs through the use of suitable movement and actuation members (not shown in the figures), which can be of the electrical type, such as electric motors, or mechanical, e.g., by means of worm-screw systems.

Said actuating device 5 comprises a longitudinal transmitting member 50 arranged in correspondence with the two adjustment elements 4, and an actuating member 51, connected to said transmitting member 50.

In particular, said transmitting member 50 extends longitudinally along the axis A and has a first end 50A, and a second end 50B, opposite to said first end 50A.

In particular, said first end 50A is connected to the base 41 of each of said adjustment elements 4 and said second end 50B is connected to said actuating member 51.

Moving and actuating members are provided (not shown in the figures), which allow said actuating device 5 to pass from a first operating position, in which said transmitting member 50 and said actuating member 51 are in a first position, to a second operative position, in which said transmitting member 50 and said actuating member 51 are in a second position, different from said first position, so that each adjustment element 4 passes respectively from said rest position to said operative position.

More specifically, when said actuating device 5 is in said first operating position, each adjustment element 4 is in said rest position, that is, it is arranged along the direction of axis A, with the respective lobe 40 arranged towards the direction of positive Y.

When, on the other hand, said actuating device 5 is in said second operative position, each adjustment element 4 is in said operative position, i.e., it is rotated with respect to the point where the respective base 41 is pivoted about, so that the respective lobe 40 enters contact with said respective movable portion 21.

As said, each roller 3 contacts each movable portion 21 of said supporting group 2, and said internal surface 11 of said annular roller 1.

Advantageously, each roller 3 is capable of rolling on said external surface 20 and on said internal surface 11 to guide a sliding movement of said internal surface 11 with respect to said external surface 20, along a circumferential direction.

The operation of the embodiment of said copying unit U described above is as follows.

A rounding device comprises the copying unit U described above, and a cutter (not shown in the figures), arranged coaxially to said copier C.

Said rounding device is moved by means of movement members of a known type (not shown in the figures) towards the panel to be worked (not shown in the figures), in particular towards a vertical surface of said panel.

Subsequently, when the copier C is placed on the vertical surface of the panel to mill the edge of the vertical surface with the cutter, said copier C is in a first operative configuration.

More in detail, with particular reference to figure 2, the copier C contacts said vertical surface by means of a first contact portion P1 or P1'.

In said first operative configuration, said actuating device 5 is in said first operative position, and each adjustment element 4 is in said rest position, i.e., it is arranged along the direction of axis A, with the respective lobe 40 arranged towards the direction of the positive Y.

Therefore, in said first operative configuration, each movable portion 21 of said supporting group 2 is in said rest position, in which it is at a first distance from said internal surface 11 of said roller 1, and said annular roller 1 of said copier C has a substantially cylindrical section.

Then, in a second operating configuration different from said first operative configuration, said copier C rests on the horizontal surface (lower or upper) of said panel, to guide the respective cutter and round the horizontal edge of said panel.

More in detail, as can be seen from figure 2, it contacts said horizontal surface by means of a second contact portion P2 of said copier C.

In said second operative configuration, said actuating device 5 is brought into said second operative position, and each adjustment element 4 is in said operative position, i.e. it is rotated with respect to the point where the respective base 41 is pivoted about so that the respective lobe 40 comes into contact with a respective movable portion 21.

In fact, as said, suitable moving and actuating members (not shown in the figures) allow said actuating device 5 passing from said first operative position to said second operative position and to said adjustment elements 4 respectively from said rest position to said operative position.

Therefore, in said second operative configuration, each movable portion 21 of said supporting group 2 is in said operative position, in which it is at a second distance from said internal surface 11 of said roller 1, wherein said second distance is smaller than said first distance of said first operating configuration.

In this way, each movable portion 21 moves along a respective radial direction (in the direction indicated by the arrows in figure 2), thus distancing themselves from each other, decreasing the distance between said external surface 20, and said internal surface 11 of said annular roller 1.

Furthermore, the pressure of each movable portion 21 on the rollers 3 interposed between the external surface 20 and the internal surface 11, allows deforming said annular roller 1.

In this second operating configuration, then, said annular roller 1 of said copier C is deformed by a few millimeters or tens of millimeters, or, the original substantially cylindrical section changes.

In this way, the annular roller 1 and the external surface 20 are in fact both ovalized, assuming a deformed shape shown in dashed line in figure 2.

In this way, the cutter will be proportionally spaced from the edge to be rounded, which will then be finished by an edge scraper device (not shown in the figures) in a following processing step.

### Advantages

A first advantage of the present invention is that of providing a copying unit equipped with a copier capable of rolling along the side surface of the panel.

A further advantage of the present invention is that of providing a copying unit, which allows to vary the dimensions of the copier.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Copying unit (U) for adjusting the machining of at least one surface and or one edge of a panel made of wood and the like for a woodworking machine, provided with a frame, comprising
a support (S), which can be fixed to the frame of said woodworking machine, and
a copier (C) installed on said support (S), wherein said copier (C) comprises
an annular roller (1) made of a partially deformable material, intended to contact said at least one surface of said panel, and
a supporting group (2), arranged within said annular roller (1), having a circular shape defined by external surface (20), **characterized in that**
said supporting group (2) is capable of modifying the shape of said annular roller (1) so as to ovalize the shape of said copier (C), moving said axis of symmetry (C') away from the surface of said panel to be machined, when said copier (C) is in contact with the portion of said annular roller (1) arranged opposite said support (S).

2. Copying unit (U) according to the preceding claim, **characterized**
**in that** it comprises a plurality of rollers (3), interposed between said external surface (20) of support group (2) and said annular roller (1), to allow a relative rotation of said annular roller (1) with respect to said support group (2),
wherein said annular roller (1) is capable of rotating around its own axis of symmetry (C'), and, when in use, is capable of rolling on the surface of said panel to be worked.

3. Copying unit (U) according to any one of the preceding claims, **characterized**
**in that** said annular roller (1) has a rolling surface (10) and an internal surface (11),
wherein said rolling surface (10) contacts, in use, the surface of the panel to be machined,
wherein said surface inner (11), faced to said the external surface (20) of said supporting group (2), contacts each roller (3) of said plurality of rollers (3), and
wherein each or said rollers (3) is capable of rolling on said external surface (20) of said supporting group (2) and on said internal surface (11).

4. Copying unit (U) according to the preceding claim, **characterized in that** said supporting group (2) comprises
one or more movable portions (21), and
one or more fixed portions (22) opposite said at least two movable portions (21),
wherein each of said one or more movable portions (21) and each of said one or more fixed portions (22) is inserted inside of said external surface (20), and
wherein each movable portion (21) is capable of passing from a rest position, wherein it is at a first distance from said inner surface (11) of said annular roller (1), to an operative position, wherein it is at a second distance from said internal surface (11) of said annular roller (1), wherein said second distance is smaller than said first distance.

5. Copying unit (U) according to any one of the preceding claims, **characterized in that** said supporting group (2) comprises at least two adjustment elements (4), wherein each adjusting element (4) is arranged between said one or more mobile portions (21) and said one or more fixed portions (22), and is capable of rotating around said axis of symmetry (C') and to contact, in use, said respective one or more mobile portions (21).

6. Copying unit (U) according to the preceding claim, **characterized in that** each adjustment element (4) has a lobe (40) capable of contacting, in use, said respective mobile portion (21), and a base (41) pivoted on a pin.

7. Copying unit (U) according to any one of claims 5 or 6, **characterized in that** each adjusting element (4) is capable of passing from a rest position, wherein it is arranged along the direction of an axis (A) perpendicular to said axis of symmetry (C'), and wherein both said adjustment elements (4) are superimposed, to an operating position, wherein each adjustment element (4) is rotated with respect to said pin, on which the base (41) is pivoted, so that said respective lobe (40) comes into contact with said respective mobile portion (21).

8. Copying unit (U) according to any one of claims 5-7, **characterized in that** said supporting group (2) comprises an actuating device (5) connected to each of said at least two adjustment elements (4), wherein said actuating device (5) comprises a transmitting member (50), longitudinal and arranged in correspondence with said at least two adjustment elements (4), and an actuating member (51) connected to said transmitting member (50).

9. Copying unit (U) according to the preceding claim, when dependent on claim 7, **characterized in that** said actuating device (5) is capable of passing from a first operating position, wherein said transmitting member (50) and said actuating member (51) are in a first position, at a second operating position, wherein said transmitting member (50) and said actuating member (51) are in a second position different from said first position, so that, when said actuating device (5) is in said first operating position, each adjustment element (4) is in said rest position, and that, when said actuating device (5) is in said second operating position, each adjustment element (4) is in said operating position.

10. Copying unit (U) according to any one of claims 4-9, **characterized**
**in that** said one or more movable portions (21) are symmetrical and arranged at a distance from said support (S), and
**in that** said one or more fixed portions (22) are symmetrical, facing said respective one or more mobile portions, and arranged at a further distance from said support (S), wherein said further distance is less than said distance.

11. Copying unit (U) according to any one of claims 4-10, **characterized in that** said one or more movable portions (21) are two movable portions (21) and that said one or more fixed portions (22) are two fixed portions (22), wherein said two movable portions (21) and said two fixed portions (22) each occupy a quarter of a circumference defined by said external surface (20).

## Patentansprüche

1. Kopiereinheit (U) zum Anpassen der Bearbeitung mindestens einer Oberfläche und/oder einer Kante einer Platte aus Holz und dergleichen für eine Holzbearbeitungsmaschine, versehen mit einem Rahmen, umfassend einen Träger (S), der am Rahmen der besagten Holzbearbeitungs- Maschine befestigt werden kann, und ein Kopiergerät (C), auf besagtem Träger (S) installiert, wobei das besagte Kopiergerät (C) umfasst:
eine ringförmige Rolle (1) aus teilweise verformbarem Material, die dazu bestimmt ist, die besagte mindestens eine Oberfläche der Platte zu berühren, und eine Stützgruppe (2), die innerhalb der besagten ringförmigen Rolle (1) angeordnet ist und eine kreisförmige Form hat, die durch die äußere Oberfläche (20) definiert ist,
**dadurch gekennzeichnet, dass**
die Stützgruppe (2) in der Lage ist, die Form der ringförmigen Walze (1) zu ändern, um die Form des Kopierers (C) zu einem Oval werden zu lassen, indem die besagte Symmetrieachse (C') von der Oberfläche der zu bearbeitenden Platte wegbewegt wird, wenn der Kopierer (C) in Kontakt mit dem Abschnitt der ringförmigen Rolle (1) ist, der gegenüber dem Träger (S) angeordnet ist.

2. Kopiereinheit (U) gemäß dem vorhergehenden Anspruch, **dadurch gekennzeichnet, dass** sie eine Vielzahl von Rollen (3) umfasst, die zwischen der besagten Außenfläche (20) der Trägergruppe (2) und der besagten ringförmigen Rolle (1) angeordnet sind, um eine relative Drehung der besagten ringförmigen Rolle (1) in Bezug zur besagten Stützgruppe (2) zu ermöglichen,
wobei die besagte ringförmige Rolle (1) um ihre eigene Symmetrieachse (C') rotieren kann und im Gebrauch auf der Oberfläche der besagten zu bearbeitenden Platte rollen kann.

3. Kopiereinheit (U) gemäß einem der vorhergehenden Ansprüche,
**dadurch gekennzeichnet, dass** die besagte ringförmige Rolle (1) eine rollende Oberfläche (10) und eine innere Oberfläche (11) aufweist,
wobei die besagte Rolloberfläche (10) während des Gebrauchs Kontakt hat mit der Oberfläche der Platte, die bearbeitet werden soll, wobei die besagte innere Oberfläche (11), welche der besagten äußeren Oberfläche (20) der besagten Stützgruppe (2) gegenübersteht, Kontakt hat mit jeder einzelnen Rolle (3) der besagten Vielzahl von Rollen (3), und
wobei jede der besagten Rollen (3) in der Lage ist, auf der besagten Außenoberfläche (20) der besagten Stützgruppe (2) und auf der besagten inneren Oberfläche (11) zu rollen.

4. Kopiereinheit (U) nach dem vorhergehenden Anspruch, **dadurch gekennzeichnet, dass** die besagte Stützgruppe (2) einen oder mehrere bewegliche Abschnitte (21) und einen oder mehrere feststehende Abschnitte (22) gegenüber den besagten mindestens zwei beweglichen Abschnitten (21) umfasst,
wobei jeder der einen oder mehreren beweglichen Abschnitte (21) und jeder der einen oder mehreren festen Abschnitte (22) in die äußere Oberfläche (20) eingesetzt ist, und
wobei jeder bewegliche Abschnitt (21) von einer Ruheposition, in der er sich in einem ersten Abstand von der besagten Innenfläche (11) der besagten ringförmigen Rolle (1) befindet, in eine Betriebsposition übergehen kann, in der er sich in einem zweiten Abstand von der besagten Innenfläche (11) der besagten ringförmigen Rolle (1) befindet, wobei der besagte zweite Abstand kleiner als der besagte erste Abstand ist.

5. Kopiereinheit (U) nach einem der vorhergehenden Ansprüche, **dadurch gekennzeichnet, dass** die besagte Stützgruppe (2) mindestens zwei Einstellelemente (4) umfasst, wobei jedes Einstellelement (4) zwischen dem besagten einen oder den mehreren beweglichen Abschnitten (21) und dem einen oder den mehreren besagten feststehenden Abschnitten (22) angeordnet und in der Lage ist, sich um die besagte Symmetrieachse (C') zu drehen und im Gebrauch mit dem besagten einen oder den mehreren beweglichen Abschnitten (21) in Kontakt zu treten.

6. Kopiereinheit (U) nach dem vorangehenden Anspruch, **dadurch gekennzeichnet, dass** jedes Einstellelement (4) einen Vorsprung (40) aufweist, der in der Lage ist, im Gebrauch mit dem besagten beweglichen Abschnitt (21) in Kontakt zu treten, und eine Basis (41) hat, die an einem Stift schwenkbar befestigt ist.

7. Kopiereinheit (U) nach einem der Ansprüche 5 oder 6, **dadurch gekennzeichnet, dass** jedes Einstellelement (4) in der Lage ist, aus einer Ruheposition, in der es entlang der Richtung einer Achse (A) angeordnet ist, welche senkrecht zur besagten Symmetrieachse (C') ist, und wo beide Einstellelemente (4) überlagert sind, zu einer Betriebsposition weiterzubewegen, wo jedes Einstellelement (4) in Bezug auf den besagten Stift gedreht wird, auf dem die Basis (41) geschwenkt wird, so dass der besagte jeweilige Vorsprung (40) mit dem jeweiligen besagten beweglichen Abschnitt (21) in Kontakt kommt.

8. Kopiereinheit (U) nach einem der Ansprüche 5-7, **dadurch gekennzeichnet, dass** die besagte Stützgruppe (2) eine Betätigungsvorrichtung (5) umfasst, die mit jedem der besagten mindestens zwei Einstellelemente (4) verbunden ist, wobei die besagte Betätigungsvorrichtung (5) ein Übertragungselement (50) umfasst, das in Längsrichtung verläuft und in Verbindung mit den mindestens zwei Einstellelementen (4) angeordnet ist, und ein Betätigungselement (51), das mit dem besagten Übertragungselement (50) verbunden ist.

9. Kopiereinheit (U) nach dem vorhergehenden Anspruch in Abhängigkeit von Anspruch 7, **dadurch gekennzeichnet, dass** die besagte Betätigungsvorrichtung (5) in der Lage ist, aus einer ersten Betriebsposition, wo das besagte Übertragungselement (50) und das besagte Betätigungselement (51) in einer ersten Position sind, in eine zweite Betriebsposition überzugehen, wo das besagte Übertragungselement (50) und das besagte Betätigungselement (51) in einer zweiten Position sind, die sich von der besagten ersten Position unterscheidet, sodass, wenn sich die besagte Betätigungsvorrichtung (5) in dieser besagten ersten Betriebsstellung befindet, jedes Einstellelement (4) in dieser besagten Ruhestellung ist, und dass, wenn sich die besagte Betätigungseinrichtung (5) in dieser besagten zweiten Betriebsstellung befindet, sich jedes Einstellelement (4) in dieser besagten Betriebsstellung befindet.

10. Kopiereinheit (U) gemäß einem Ansprüche 4-9,
**dadurch gekennzeichnet, dass** der besagte eine oder die mehreren beweglichen Abschnitte (21) symmetrisch und in einem Abstand von der besagten Stütze (S) angeordnet sind, und dass der besagte eine oder die mehreren feststehenden Abschnitte (22) symmetrisch sind und
den jeweiligen einen oder mehreren beweglichen Abschnitten zugewandt sind, und in einem weiteren Abstand von der besagten Stütze (S) angeordnet sind, wobei der besagte weitere Abstand kleiner ist als besagter Abstand.

11. Kopiereinheit (U) nach einem der Ansprüche 4 bis 10, **dadurch gekennzeichnet, dass** der besagte eine oder die mehreren beweglichen Abschnitte (21) zwei bewegliche Abschnitte (21) sind und dass der besagte eine oder die mehreren festen Abschnitte (22) zwei feste Abschnitte (22) sind, wobei die besagten zwei beweglichen Abschnitte (21) und die zwei besagten feststehenden Abschnitte (22) jeweils ein Viertel eines Umfangs einnehmen, der durch die besagte äußere Oberfläche (20) definiert ist.

## Revendications

1. Unité de copiage (U) pour régler l'usinage d'au moins une surface et/ou un bord d'un panneau en bois et similaires pour une machine à bois, munie d'un châssis, comprenant
un support (S), qui peut être fixé au châssis de ladite machine à bois, et
un copieur (C) installé sur ledit support (S), dans lequel ledit copieur (C) comprend
un rouleau annulaire (1) fait d'un matériau partiellement déformable, destiné à entrer en contact avec ladite au moins une surface dudit panneau, et
un groupe de support (2), disposé à l'intérieur dudit rouleau annulaire (1), ayant une forme circulaire définie par une surface externe (20), **caractérisé en ce que**
ledit groupe de support (2) est capable de modifier la forme dudit rouleau annulaire (1) de manière à ovaliser la forme dudit copieur (C), en éloignant ledit axe de symétrie (C') de la surface dudit panneau à usiner, lorsque ledit copieur (C) est en contact avec la partie dudit rouleau annulaire (1) disposée en face dudit support (S).

2. Unité de copiage (U) selon la revendication précédente, **caractérisée en ce que**
elle comprend une pluralité de rouleaux (3), interposés entre ladite surface externe (20) du groupe de support (2) et ledit rouleau annulaire (1), pour permettre une rotation relative dudit rouleau annulaire (1) par rapport audit groupe de support (2),
dans lequel ledit rouleau annulaire (1) est capable de tourner autour de son propre axe de symétrie (C'), et, lorsqu'il est utilisé, est capable de rouler sur la surface dudit panneau à usiner.

3. Unité de copiage (U) selon l'une quelconque des revendications précédentes, **caractérisée en ce que** ledit rouleau annulaire (1) a une surface de roulement (10) et une surface interne (11),
dans lequel ladite surface de roulement (10) est en contact, en utilisation, avec la surface du panneau à usiner, dans lequel ladite surface interne (11), faisant face à ladite surface externe (20) dudit groupe de support (2), est en contact avec chaque rouleau (3) de ladite pluralité de rouleaux (3), et
dans lequel chacun desdits rouleaux (3) est capable de rouler sur ladite surface externe (20) dudit groupe de support (2) et sur ladite surface interne (11).

4. Unité de copiage (U) selon la revendication précédente, **caractérisée en ce que** ledit groupe de support (2) comprend
une ou plusieurs parties mobiles (21), et
une ou plusieurs parties fixes (22) opposées auxdites au moins deux parties mobiles (21),
dans lequel chacune desdites une ou plusieurs parties mobiles (21) et chacune desdites une ou plusieurs parties fixes (22) est insérée à l'intérieur de ladite surface externe (20), et
dans lequel chaque partie mobile (21) est capable de passer d'une position de repos, dans laquelle elle est à une première distance de ladite surface interne (11) dudit rouleau annulaire (1), à une position opérationnelle, dans laquelle elle est à une deuxième distance de ladite surface interne (11) dudit rouleau annulaire (1), dans lequel ladite deuxième distance est inférieure à ladite première distance.

5. Unité de copiage (U) selon l'une quelconque des revendications précédentes, **caractérisée en ce que** ledit groupe de support (2) comprend au moins deux éléments d'ajustement (4), dans laquelle chaque élément d'ajustement (4) est disposé entre lesdites une ou plusieurs parties mobiles (21) et lesdites une ou plusieurs parties fixes (22), et est capable de tourner autour dudit axe de symétrie (C') et d'entrer en contact, en utilisation, avec lesdites une ou plusieurs parties mobiles (21) respectives.

6. Unité de copiage (U) selon la revendication précédente, **caractérisée en ce que** chaque élément d'ajustement (4) a un lobe (40) capable de venir en contact, en utilisation, avec ladite partie mobile respective (21), et une base (41) pivotée sur un axe.

7. Unité de copiage (U) selon l'une quelconque des revendications 5 ou 6, **caractérisée en ce que** chaque élément d'ajustement (4) est capable de passer d'une position de repos, dans laquelle il est disposé selon la direction d'un axe (A) perpendiculaire audit axe de symétrie (C'), et dans laquelle lesdits deux éléments d'ajustement (4) sont superposés, à une position de fonctionnement, dans laquelle chaque élément d'ajustement (4) est tourné par rapport audit axe, sur lequel la base (41) est pivotée, de sorte que ledit lobe respectif (40) vient en contact avec ladite partie mobile respective (21).

8. Unité de copiage (U) selon l'une quelconque des revendications 5 à 7, **caractérisée en ce que** ledit groupe de support (2) comprend un dispositif d'actionnement (5) relié à chacun desdits au moins deux éléments d'ajustement (4), dans lequel ledit dispositif d'actionnement (5) comprend un élément de transmission (50), longitudinal et disposé en correspondance avec lesdits au moins deux éléments d'ajustement (4), et un élément d'actionnement (51) relié audit élément de transmission (50).

9. Unité de copiage (U) selon la revendication précédente, lorsqu'elle dépend de la revendication 7, **caractérisée en ce que** ledit dispositif d'actionnement (5) est capable de passer d'une première position de fonctionnement, dans laquelle ledit élément de transmission (50) et ledit élément d'actionnement (51) sont dans une première position, à une deuxième position de fonctionnement, dans laquelle ledit élément de transmission (50) et ledit élément d'actionnement (51) sont dans une deuxième position différente de ladite première position, de sorte que, lorsque ledit dispositif d'actionnement (5) est dans ladite première position de fonctionnement, chaque élément d'ajustement (4) est dans ladite position de repos, et que, lorsque ledit dispositif d'actionnement (5) est dans ladite deuxième position de fonctionnement, chaque élément d'ajustement (4) est dans ladite position de fonctionnement.

10. Unité de copiage (U) selon l'une quelconque des revendications 4 à 9,
**caractérisée en ce que**
lesdites une ou plusieurs parties mobiles (21) sont symétriques et disposées à une distance dudit support (S), et
**en ce que** lesdites une ou plusieurs parties fixes (22) sont symétriques, en face desdites une ou plusieurs parties mobiles respectives, et disposées à une distance supplémentaire dudit support (S), dans lequel ladite distance supplémentaire est inférieure à ladite distance.

11. Unité de copiage (U) selon l'une quelconque des revendications 4 à 10, **caractérisée en ce que** ladite ou lesdites parties mobiles (21) sont deux parties mobiles (21) et que ladite ou lesdites parties fixes (22) sont deux parties fixes (22), dans laquelle lesdites deux parties mobiles (21) et lesdites deux parties fixes (22) occupent chacune un quart d'une circonférence définie par ladite surface externe (20).
